Europäisches Patentamt

European Patent Office

Office européen des brevets

(19)

(11) Numéro de publication: **0 202 723**
**A2**

## (12) DEMANDE DE BREVET EUROPEEN

(21) Numéro de dépôt: **86200900.8**

(22) Date de dépôt: **23.05.86**

(51) Int. Cl.⁴: **G06M 3/06** , G06M 1/27

---

(30) Priorité: **24.05.85 BE 6048094**

(43) Date de publication de la demande:
**26.11.86 Bulletin 86/48**

(84) Etats contractants désignés:
**AT CH DE FR GB IT LI LU NL SE**

(71) Demandeur: **S.A. AQUACOM**
**rue de Magnée 110**
**B-4610 Beyne-Heusay(BE)**

(72) Inventeur: **Lenfant, Theo**
**rue Rotenberg 55**
**B-4700 Eupen(BE)**

(74) Mandataire: **Dellicour, Paul**
**Office de Brevets E. Dellicour rue Fabry**
**18/012**
**B-4000 Liège(BE)**

---

(54) **Perfectionnement au système de lecture à distance de l'index d'un compteur.**

(57) La plaque de transmission pour système de lecture à distance de l'index d'un compteur totalisateur à plots de contact, consiste en un socle (1) comportant la ou les bobines de transmission (2,3) et pourvu sur sa face arrière d'une unique cheville de localisation (4), à travers laquelle fait saillie le câble (5) de liaison au compteur et destinée à être insérée dans une paroi.

FIG.2

Perfectionnement au système de lecture à distance de l'index d'un compteur.

La présente invention concerne la lecture à distance de l'index d'un compteur totalisateur à plots de contact et est relative à un perfectionnement du système de transmission de cet index, applicable à tout genre de fluides, tels que eau, gaz, mazout ou électricité.

Il est connu que dans le système de lecture à distance de l'index d'un compteur, lorsque l'opérateur pose un pistolet de lecture sur une plaque de transmission du compteur, un microswitch détecte la présence de cette plaque et en avertit un ordinateur approprié, qui envoie un train d'ondes de puissance à travers la bobine formant transformateur avec la bobine de la plaque de transmission, celle-ci fournissant alors la puissance à toute l'électronique placée dans le compteur.

Le train d'ondes étant modulé, la démodulation dans le compteur fournit les signaux nécessaires à l'électronique pour le démultiplexage et la lecture sérielle de plots commutés et du numéro du compteur.

La sortie sérielle se fait via la seconde bobine de la plaque de transmission formant transformateur de signaux faibles avec la seconde bobine du pistolet de lecture, dont le signal est amplifié pour fournir à l'ordinateur l'index et le numéro du compteur, données qui à ce stade sont encore codées avec un système de vérification. Ensuite, l'ordinateur décode ces données et affiche le résultat sur son écran LCD.

Un clavier permet la manipulation aisée des données, qui peuvent à la fin de la journée être transférées sans problème vers l'ordinateur principal de gestion de la société distributrice.

L'objet de l'invention est d'apporter un perfectionnement à ce système de lecture connu par une conformation caractéristique de la plaque de transmission du compteur.

Suivant l'invention une plaque de transmission inductive est caractérisée en ce qu'elle consiste en un socle comportant la ou les bobines de transmission et pourvu sur sa face arrière d'une unique cheville de localisation, à travers laquelle fait saillie le câble de liaison au compteur et destinée à être insérée dans une paroi.

L'invention concerne également le système de fixation d'une telle plaque de transmission. Il consiste à forer dans la paroi de support un trou correspondant au diamètre de la cheville de localisation, à faire passer le câble de liaison à travers ce trou, à enduire la face arrière de la plaque et ladite cheville d'un agent collant durcissable à appliquer la plaque contre la paroi avec la cheville dans le trou et à maintenir la plaque en place pour permettre la prise de l'agent collant.

Pour mieux faire comprendre l'invention celle-ci est décrite maintenant sur la base du dessin annexé, à titre d'exemple uniquement, montrant en :

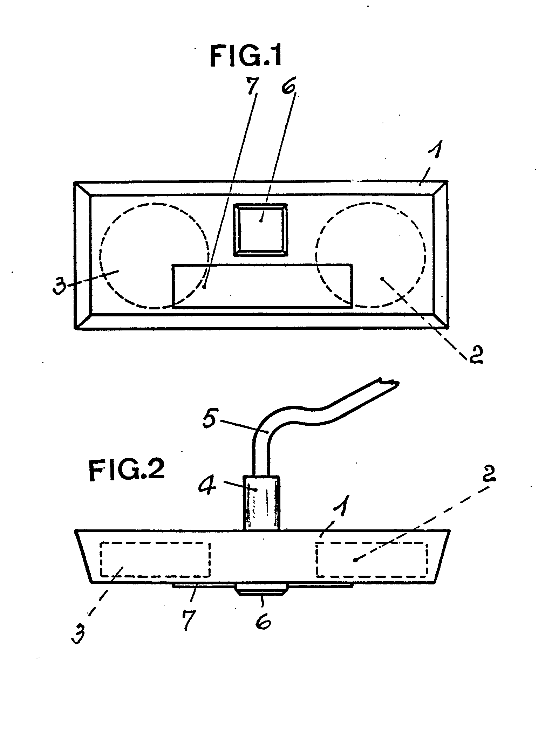

Figure 1 une vue de face d'une plaque de transmission suivant l'invention, et

Figure 2 une vue en plan de la plaque de la figure 1.

Une plaque de transmission inductive suivant l'invention pour la lecture de l'index d'un compteur totalisateur à plots de contact, tel que celui décrit dans la demande de brevet déposée conjointement par la demanderesse, consiste en un socle 1 renfermant deux bobines de transmission, une bobine 2 destinée à fournir la puissance à toute l'électronique du compteur et une bobine 3 pour la sortie sérielle, et portant sur sa face arrière une cheville de localisation 4.

Une telle plaque est destinée à être apposée sur une paroi, de manière à être facilement accessible pour l'opérateur. On conçoit aisément qu'elle puisse être apposée par exemple sur la porte d'entrée d'un immeuble. C'est ainsi qu'une telle plaque peut encore être avantageusement pourvue sur sa face avant d'un commutateur de sonnerie 6 et d'un porte-étiquette 7.

Le but de l'invention en conformant la plaque de transmission de cette manière est de simplifier à l'extrême sa fixation. En effet, le système de fixation consiste à :

-forer un seul et unique trou, du diamètre de la cheville de localisation, dans la paroi de support ;

-passer le câble de transmission dans le trou ;

-enduire la face arrière de la plaque et la cheville de localisation d'un agent collant durcissable ;

-appliquer la plaque contre la paroi avec la cheville dans le trou ;

-maintenir la plaque en place en pinçant le câble de l'autre côté de la paroi pour permettre la prise de l'agent collant.

Grâce à un tel système la fixation présente l'avantage d'être complètement étanche par rapport au gaz et à l'humidité et de n'offrir aucune cavité pour abriter des parasites, sans compter la facilité d'installation grâce à un seul et unique trou, par exemple dans la porte d'entrée d'un immeuble.

**Revendications**

1. Plaque de transmission pour système de lecture à distance de l'index d'un compteur totalisateur à plots de contact, caractérisée en ce qu'elle consiste en un socle (1) comportant la ou les bobines de transmission (2,3) et pourvu sur sa face arrière d'une unique cheville de localisation (4), à travers laquelle fait saillie le câble (5) de liaison au compteur et destinée à être insérée dans une paroi.

2. Plaque de transmission suivant la revendication 1, caractérisée en ce qu'elle comporte sur sa face avant un commutateur de sonnerie (6).

3. Système de fixation d'une plaque de transmission telle que décrite dans l'une quelconque des revendications 1 et 2, caractérisé en ce qu'il consiste à forer dans la paroi de support un trou correspondant au diamètre de la cheville de localisation (4), à faire passer le câble de liaison (5) à travers ce trou, à enduire la face arrière de la plaque (1) et ladite cheville (4) d'un agent collant durcissable, à appliquer la plaque contre la paroi avec la cheville (4) dans le trou et à maintenir la plaque (1) en place pour permettre la prise de l'agent collant.

## FIG.1

## FIG.2